# EUROPEAN PATENT APPLICATION

(11) **EP 0 719 581 A2**
(43) Date of publication of application: **03.07.1996**
(21) Application number: 95120614.3
(22) Date of filing: 27.12.1995
(51) Int. Cl.: B01D 69/08

(54) **Improved production of multilayer composite membranes**

(30) Priority: 28.12.1994 US 365389
(71) Applicant: PRAXAIR TECHNOLOGY, INC., Danbury, CT 06810-5113 (US)
(72) Inventor: Burchesky, Robert Douglas, Norwood, MA 02062 (US); Rahman, Mahmud, Swapan, Boston, MA 02215 (US); Nelson, Joyce Katz, Lexington, MA 02173 (US); Bikson, Benjamin, Brookline, MA 02146 (US)
(74) Representative: Schwan, Gerhard, Dipl.-Ing.

(57) **Abstract**

Multilayer composite gas separation membranes are produced by a continuous in-line process by coating an interior gas separation layer on a hollow fiber substrate followed by an exterior protective layer thereon before the composite membrane contacts any processing equipment.

## Description

### Background of the Invention

Field of the Invention - This invention relates to the production of composite membranes. More particularly, it relates to an improved process for the production of multilayer composite hollow fiber membranes.

Description of the Prior Art - The preparation of composite multilayer membranes for fluid separations is well known in the art. Thus, Browall et al, U.S. 3,980,456, disclose the preparation of such multilayer composites by separately laminating ultrathin layers to a porous support. A very thin separation layer, which essentially provides the fluid separation characteristics of the membrane, is positioned on the porous support as an intermediate layer. This very thin layer also serves as a cushion and an adhesive, with an external layer being applied thereto as a protective, defect sealing layer.

In U.S. Patent 3,874,986, Browall et al. further disclose preparation of multilayer composite gas separation membrane with an ultrathin layer of organosiloxane polycarbonate copolymer disposed between porous support and exterior gas separation layer formed from poly(phenylene oxide). The multilayer membranes disclosed in said U.S. Patents 3,980,456 and 3,874,986 are directed towards preparation of improved defect free gas separation membranes.

It has been further disclosed in the art that defects present in preformed composite gas separation membranes can be effectively repaired by bringing the membranes in contact with a volatile solvent that frequently further contains minute amounts of dissolved additives. Such treatments are described by Bikson et al in U.S. Patent 4,767,422. The treatments are usually applied after the composite membranes have been incorporated into a cartridge.

Preparation of multilayer composite gas separation membranes in further described by Cabasso et al. in U.S. Patent 4,602,922. The membranes are prepared by forming a crosslinked polysiloxane gutter layer on a porous support layer with a gas separation layer coated over the gutter layer.

A method of forming multilayer membranes by guiding a hollow fiber support through the central bore of a spinneret is disclosed by Sluma et al. in U.S. Patent 5,356,461. The spinneret has one or several concentric annular slits and/or annular grooves, through which a solution of one of the polymers forming the separating layers is applied. The spinneret can be also utilized to produce a single layer coated hollow fiber that can be fed continuously or discontinuously to one or more additional process steps in order to produce a multilayer membrane.

Further examples of preparation of multilayer composite gas separation membranes can be found in U.S. Patents 4,631,075; 4,713,292; 4,713,292; 4,781,378 and 5,354,469.

Preparation of multilayer composite gas separation membranes in a single coating step from solutions of cellulose acetate with poly(methyl methacrylate) is described by Bikson et al. in the Journal of Membrane Science, 94, (1994), p313-328.

A one-step coating process that provides an interior gas separation layer and an exterior defect sealing layer is described by Bikson et al, in U.S. Patent 5,356,459. The invention of the Bikson et al patent enables the external layer to be applied as part of a single coating step, thereby reducing the complexity and cost of multilayer composite membrane production. While the one-step coating process of Bikson et al is highly advantageous, it is dependent upon the use of particular polymeric coating compositions suitable of forming an interior separation layer on a porous support and an additive capable of forming the desired protective, external defect sealing layer thereon. In various applications, however, it may be desirable to employ other polymeric materials having suitable gas separation characteristics for the interior membrane separation layer and/or a protective, external, defect sealing layer other than that formed by the particular additive material used in the process of Bikson et al.

It is an object of the invention, therefore, to provide an improved process for the production of composite membranes.

It is a further object of the invention to provide an improved one-step process for the production of composite membranes having multiple separation layers deposited on a porous layer.

With these and other objects in mind, the subject invention is hereinafter described in detail, the novel features thereof being particularly pointed out in the appended claims.

### Summary of the Invention

At least two distinctly different layers are coated on a porous hollow fiber substrate in a continuous process to produce multilayer composite gas separation membrane. The distinctive feature of the continuous coating process of the present invention is that multiple coating layers are applied in an apparatus equipped with a single coating/drying chamber before being contacted by take-up equipment. In one embodiment of the present invention a first coating, comprised of a highly selective gas separation polymer, is applied to the substrate followed by a second coating, comprised of a highly permeable elastomeric polymer that is applied "in-line" over the first coating before the resulting composite membrane contacts take-up equipment. Exceptionally thin and uniform external coating layers can be deposited by the process of this invention that provides for improved gas separation/permeation characteristics of the composite membrane as a result of the minimization of damage thereto during the preparation thereof by the process of the invention.

### Brief Description of the Drawings

The invention is further described herein with reference to the accompanying drawings in which:
Fig. 1 is a schematic side elevational view of suitable apparatus for employing the process of the invention in applying two coatings to a hollow fiber substrate; and
Fig. 2 is a schematic side elevational view of suitable apparatus for employing the process of the invention to apply three coatings to a hollow fiber substrate; and
Fig. 3 is a schematic side elevational view of another embodiment of an apparatus for employing the process of the invention in applying two coatings to hollow fiber substrate.

### Detailed Description of the Invention

The objects of the invention are accomplished by coating two or more distinctly different layers on a hollow fiber substrate "in line" before the resulting composite membrane is taken up by processing equipment. The resulting multilayer composite membrane exhibits improved gas separation/permeation characteristics as compared to membranes made by conventional processes.

In one embodiment of this invention, the multilayer membrane is comprised of the first layer formed from a high gas separation factor material deposited on a hollow fiber substrate and the second exterior layer of high gas permeability material. The interior gas separation layer can be comprised of polyimide, polyester, polycarbonate, cellulosic materials and polysulfone or poly(phenylene oxide) derivative polymers to name a few. The exterior high gas permeability material functions primarily as a protective layer. The intrinsic gas permeability coefficient of the exterior layer material towards the fast gas in the gas separation mixture is typically much higher, preferably more than 20 times higher than that of the first interior layer material. Preferably the exterior layer material exhibits low frictional characteristics and low surface energy characteristics. The surface energy of the exterior layer material is frequently below 30 dynes/cm, preferably below 20 dynes/cm. Some of the preferred exterior layer materials are polysiloxanes or perfluorinated materials containing CF₃ and CF₂ groups. A distinctive advantage of the process of the present invention is that a very thin exterior layer can be deposited while still providing good protective/defect sealing characteristics. A very thin exterior layer provides for improved permeation/separation characteristics of the composite membrane. Furthermore, materials with somewhat lower gas permeation coefficients can be effectively employed as exterior protective layer materials in the process of this invention without adversely affecting composite membrane permeation characteristics due to the substantial decrease in layer thickness. In preferred embodiments the exterior layer is less than 0.2µ thick, most preferably less than 500 Å thick.

In another embodiment of this invention the multilayer membrane is comprised of three layers wherein the first layer deposited on the porous support is comprised of high gas permeability material to form a gutter layer. Superimposed on the gutter layer is a thin layer comprised of high gas separation factor material, further overcoated with a protective layer comprised of high gas permeability material.

The distinctive feature of the present invention is that at least two coating operations are carried out continuously to form a multilayer composite membrane. In some embodiments, an individual coating operation can produce multiple layers in a single coating step, as, for example, described in the Bikson et al patent U.S. 5,356,459, referred to above.

In further embodiments of this invention the materials of consecutive layers can be selected to bond chemically to each other via covalent or ionic bonds. For example, the first and second layer can form an interfacial polycondensation layer via a reaction of two complementary polyfunctional compounds. The first and second layer would typically incorporate reactive compounds having at least two functional groups that are mutually reactive in a condensation polymerization reaction. Most frequently at least one of these compounds is siloxane. Examples of such reactive siloxanes can be found in U.S. Patents 4,602,922; 4,781,733; and 5,049,167. In another embodiment of this invention, the chemical bond between layers is an ionic bond. For example, the first layer can be comprised of sulfonated polysulfone or sulfonated poly(phenylene oxide) in H⁺ form and the second layer can be comprised of an amino functional siloxane. Formation of such reactive multilayer gas separation membranes has been described in detail in the Bikson et al patent, U.S. 5,131,927 incorporated herein by reference.

It will be obvious to those skilled in the art that numerous further embodiments may be possible including chemical bonding between all coating layers, such as covalent bonding between the first and second layer, coupled with ionic bonding between the second and third layers, etc.

Since, in the practice of the invention, the outer layer and in particular the protective coating is applied before the composite hollow fiber membrane contacts any of the processing take-up equipment necessarily employed for the collection of the composite hollow fiber membrane, the invention offers significant advantages over conventional processes. The outermost coating assumes the immediate function of a protective coating that prevents damage to the very think highly selective separation layer on contact of the composite hollow fiber membrane with processing take-up equipment, such as rollers, guides and the like. It is commonly the case that the highly selective separation layer material is a rigid glassy polymer that can be easily damaged upon being processed through the ordinary take-up equipment used to collect coated hollow fiber membranes. By applying a protective coating in-line prior to any contact of any kind with any element of the take-up equipment, the protective coating is able to preclude or minimize damage from said take-up equipment. In addition to this highly important advantage, the process of the invention has the additional, significant advantage of enabling desirable efficiencies of time and cost to be realized by the completion of both coating operations, i.e., the coating of a very thin separation layer and of an outer protective layer, in a single pass instead of separate passes through two separate coating systems or by applying a defect sealing coating to hollow fiber membranes in an assembled separation cartridge.

The hollow fibers treated in the process of the invention will be understood to provide support for the thin separation and protective layers deposited thereon, but not to have a controlling effect on the gas separation characteristics of the composite membrane. The hollow fiber substrate portion of the multilayer composite membrane produced in the practice of the invention can be formed from any desired inorganic or organic material, with polysulfones being generally preferred substrate materials. Other typical materials that can be used to form the hollow fiber substrates include polystyrenes), polycarbonates, poly(phenylene oxides), cellulosic polymers, such as cellulose acetate, polyamides, polyimides and the like.

The hollow fiber substrates used in the invention can be spun in any convenient manner. Polysulfone hollow fibers can, for example, be spun from a ternary solution of polysulfone in a solvent/non-solvent mixture well known in the art following the procedures described by I. Cabasso in "Hollow Fiber Membranes", Kirk Othmer: Enc. of Chem. Tech., 12, Third Ed., pp. 492-517 (1980). Preparation of hollow fiber substrates that are particularly suitable for prep film composite membranes is described in the Bikson et al patent, U.S. 5,181,940.

In the forming of the desired composite hollow fiber membranes any suitable gas separation material can be employed. The materials are applied to the surface of the hollow fiber substrate from solutions. Any suitable solvent or mixture of solvents for the membrane-forming material can be used, and those skilled in the art will appreciate the various solvents most suitable for a particular membrane-forming material/hollow fiber substrate combination. In general, the solvent will dissolve membrane-forming material to produce a homogeneous solution. The solvent used to prepare the solution can also be a mixture of one or more solvents. The solution should wet the surface of the substrate and be of low enough viscosity that it will be easily applied as an even coating. The viscosity at application temperature will be generally less than 50 centipoise, and will be typically in the range of from about 0.5 to about 10 centipoise. The concentration of the membrane-forming material in the solution will typically vary from about 0.25 to about 2 percent (weight by volume).

Illustrative of solvents that can be used to prepare the membrane-forming solutions are pentane, hexane, cyclohexane, 2-ethylhexane, methanol, ethanol, the propanols, ketones, acidic acid, water, ethyl acetate, and mixtures thereof.

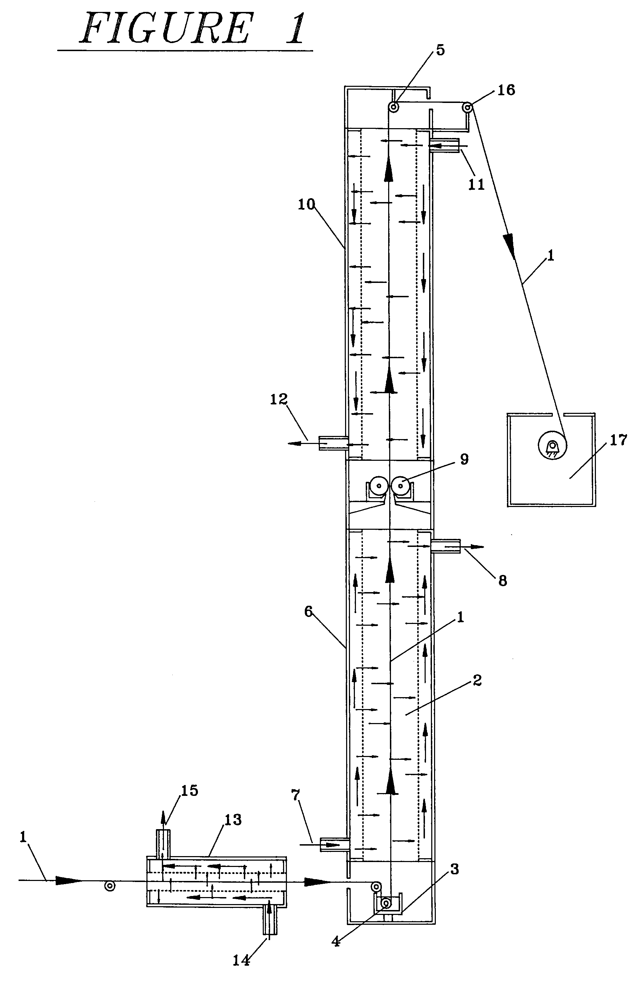

Preparation of a composite hollow fiber membrane having an intermediate separation layer and an additional outer separation layer, preferably a protective layer, is further described in detail. The composite membrane is prepared utilizing the apparatus of this invention illustrated in Fig. 1. A hollow fiber substrate 1 is continuously feed by a drive roll system (not shown) into a predrying oven 13 and into the coating/drying apparatus 2 of this invention. A single filament is depicted in Fig. 1, however, it is understood that a tow of multiple filaments is preferably employed. Hot air is circulated through the predrying oven 13 through entrance port 14 and exit port 15 as shown, to remove to a desired extent any solvents present in the hollow fiber from prior spinning and washing steps. The predried or partially dried hollow fibers are first introduced into the coating vessel 3 containing the first coating solution. The coating is applied by a dip coating method wherein hollow fibers are directed over roller 4 positioned in the coating solution as shown. However, other methods of application such as foam, spray, dye, roller, and metered finish type applications can be employed as well.

A desired separation layer material is deposited by the first coating applicator to form an intermediate gas separation layer that substantially controls the overall gas separation characteristics of the composite membrane. Following application of the first coating solution, hollow fibers 1 are directed upward over roller 4 and towards the second roller 5 located at an elevated position generally such as to enable hollow fiber 1 to pass vertically upward through the remaining elements of the coating/drying system 2. Upon exiting the coating vessel 3, hollow fibers 1 pass upward through in-line drying oven 6 which is an integral part of the coating drying apparatus 2 without contact with any mechanical part or element thereof. Hot air is circulated through the drying oven 6 through entrance port 7 and exit port 8 as shown. The drying can be alternatively effected by infrared heaters or wall heaters positioned in drying oven 6.

Following removal of the solvent components of the first coating solution the hollow fibers 1 are directed upward through in-line roller coater applicator 9, adapted to apply a second coating solution to the hollow fiber. The second coating applicator deposits a protective, defect sealing layer over the very thin first separation layer to protect this layer during the subsequent processing steps. It will be further understood that other coating applicators such as dye applicator, metered finish applicator, etc. can be employed as applicator 9 to deposit the second coating layer. Following the application of the second coating solution, hollow fibers 1 are continuously fed through in-line drying oven 10 without contact with any mechanical part or element thereof. Hot air is circulated through the drying oven 10 through entrance port 11 and exit port 12 as shown to remove residual solvents. The drying in the oven 10 can be further effected by infrared or wall heaters. Following drying in heated oven 10 to remove solvent components of the second coating solution, hollow fibers 1 are passed over roller 5 and any desired additional roller 16 (or rollers), drive roller or tension control system (not shown) that are used to guide the composite hollow fiber membranes to the take-up equipment 17, collection spools, etc.

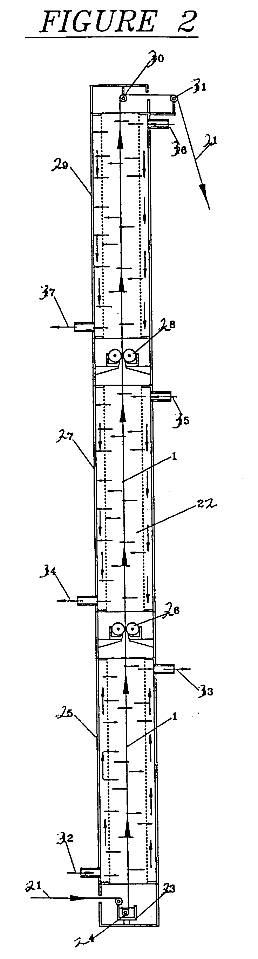

Fig. 2 illustrates an embodiment of this invention in which three successive coatings are applied to the hollow fiber substrate that may consist of two intermediate coatings and an outer protective coating. Continuous, preconditioned hollow fiber substrate 21 is directed by a drive roll system (not shown) into ating/drying apparatus 22. The fibers are directed first into coating vessel 23 wherein they are coated by the first coating solution. First coating solution will be comprised of a desired separation layer material such as a gutter layer material or high gas separation factor material.

Following application of the first coating solution, hollow fibers are directed upward over roller 24 positioned in the coating vessel 23 and second roller 30 located at an elevated position generally such as to enable hollow fibers to pass vertically upward through the remaining in-line elements of the coating system. Upon exiting coating vessel 23, hollow fibers pass upward through in-line drying oven, section 25 of the drying/coating apparatus 22, without contact with any mechanical part or element thereof.

Following drying in oven 25 to remove solvent components of first coating solution, hollow fibers pass further upward through roller coater applicator 26 adapted to apply a second coating solution to hollow fibers. This second coating solution generally comprises a material that will form a second intermediate layer to enhance or facilitate the gas separation characteristics of the first coating applied to the hollow fiber. Following the application of the second coating solution thereto, hollow fibers continue their vertical passage through in-line heated oven, section 27 of the drying/coating apparatus 22, without contact with any mechanical part or element thereof.

Following drying in oven 27 to remove solvent components of the second coating solution, hollow fibers pass further upward through in-line roller coater applicator 28 adapted to apply a third coating solution to the hollow fiber. The third coating solution typically comprises a protective coating material, typically a silicone rubber, to repair defects in the intermediate layers and to protect internal layers during downstream handling steps. Roller coater applicators 26 and 28 are comprised, as illustrated, of a double roller system positioned on opposite sides of hollow fibers such as to apply coating solution to hollow fibers with minimal contact therewith. Following application of the third coating solution, hollow fibers continue their vertical passage through heated oven, section 29 of the coating/drying apparatus 22, without contact with any mechanical part or element thereof.

Following drying in oven 29 to remove the solvent component of the third coating solution, hollow fibers pass further upward and contact second roller 30, and any desired additional roller 31, drive rollers and tension devices (not shown) used to guide and pass composite hollow fiber membranes to the take-up equipment and collecting spools, (not shown). Hot air is circulated through drying ovens 25, 27 and 29 via entrance ports 32, 35 and 36 and exit ports 33, 34, and 37 to remove coating solvents from three successive coating operations.

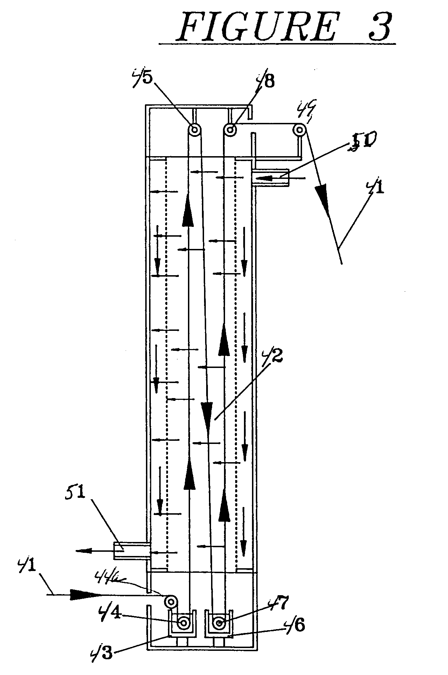

Fig. 3 illustrates another embodiment of this invention to produce a multilayer composite membrane in a single coating/drying chamber apparatus. Preconditioned hollow fibers 41 are continuously fed by a drive roll system (not shown) into the coating drying apparatus 42. The fibers are directed first into coating vessel 43 and coated by the first coating solution. The coating is applied by a dip coating method wherein hollow fibers are directed over roller 44a and roller 44 positioned in the coating solution as shown. Following application of the first coating solution, hollow fibers 41 are directed upwards into the drying oven and then downwards over roller 45 into the second coating vessel 46. The second coating solution is applied by a dip coating method wherein hollow fibers are directed over roller 47 positioned in the coating solution as shown. Upon exiting the coating vessel 46, hollow fibers are dried and then guided by rollers 48 and 49 to take-up equipment that may include drive rolls and tension devices (not shown). Hot air is circulated through entrance port 50 and exit port 51 of the drying chamber to remove coating solvents from the two successive coating operations. Other coating applicators such as dye coaters may be utilized effectively in the apparatus of Fig. 3 as well; however, the use of such applications may require an alteration in direction of fiber movement in the coating/drying apparatus for optimal coating deposition.

It will be understood that various changes and modifications can be made in the details of the invention without departing from the scope thereof as recited in the appended claims.

The invention is further illustrated with respect to the following representative examples, which should not be construed as limiting the scope of the invention as set forth in the appended claims.

### Example 1

### Preparation of composite sulfonated F6-BisA polysulfone hollow fiber membrane with external protective layer.

A multilayer composite hollow fiber membrane was prepared utilizing the apparatus of this invention shown in Fig. 1. Polysulfone hollow fibers were first coated with a sulfonated hexafluoro Bis A polysulfone, 6F-SPS polymer. Polysulfone hollow fibers employed in the example were highly porous as demonstrated by the gas permeation measurements. Hollow fibers were found to exhibit a helium permeation rate of 1.7- 10⁻² CM³/CM² . cmHg . sec and a helium/nitrogen separation factor of about 2. The sulfonated polysulfone, 6F-SPS, was prepared as described in the Kawakami et al patent, U.S. 4,971,695, incorporated hereby by reference. The ion exchange capacity of the material was 1.53 meq/g of dry polymer in H⁺ form. The coating solution was prepared by dissolving 1.7% (weight by volume) of 6F-SPS (Li⁺ form) in a reagent alcohol followed by filtration through a 1.5 µm glass filter. The polysulfone hollow fibers were predried at a temperature of up to 120°C and coated with the first coating solution. The first coating layer was dried at about 60°C and the dried fibers were continuously coated with the second coating solution comprised of 0.1% (weight by volume) of polysiloxane (Dow Corning Sylgard 194) in cyclohexane. The second coating was dried at about 130°C and was collected on a take-up spool. A hollow fiber separatory module was constructed from the thus coated hollow fibers as described in the Bikson et al patent, U.S. 5,026,479, and used for dehydration of compressed air at about 7 atmospheres and 20°C. The feed air contained about 2,700 ppmv of water. A sweep fluid that contained 1 ppmv of water was introduced on the permeate side. Further description of gas dehydration process and procedures for determining gas permeation rates can be found in Example 1 of the above referenced U.S. Patent 5,026,479. The separatory module exhibited a water vapor permeation rate of about 2 x 10⁻³ cm³/cm² . cmHg . sec. In a separate air separation experiment, the oxygen permeability for this permeator was found to be 9.5 10⁻⁷ cm³/cm² . cmHg . sec. with 0₂/N₂ separation factor of 5.6. The permeator thus exhibited an apparent H₂0/0₂ separation factor of about 2,100 and an H₂0/N₂ separation factor of about 11,800.

### Comparative Example 2 (not a part of the present invention)

A composite sulfonated polysulfone, 6F-SPS, hollow fiber membrane was prepared, essentially as described in Example 1 except that a single layer of 6F-SPS polymer was applied without application of a second protective coating polymer. A hollow fiber separation device was constructed and tested as described in Example 1. The permeator exhibited a water vapor permeation rate of 2 x 10⁻³ cm³/cm². cmHg . sec. but substantially inferior H₂0/0₂ and H₂0/N₂ separation factors of about 450 and 720, respectively.

The substantially improved selectivity for H₂0/0₂ and H₂0/N₂ separation resulting from the use of composite membranes produced by the processes of the invention vis-a-vis conventional processing, is indicative of the fact that damage to the separation layer can readily occur in said conventional processing, and that the invention is a convenient and efficient approach for precluding such damage. By avoiding or minimizing damage to the separation layer, the selectivity of the composite membrane is desirably improved.

The invention provides a convenient, practical and desirable advance in the art. The need exists in the art for composite membranes with ever thinner separation layers in order to satisfy the ever growing desire for improved performance levels for an increasing variety of gas separation applications. The production of such thin separation layers at higher and higher levels of perfection, i.e., with less and less defects, has become increasing urgent in the art. The invention satisfies this desire in the art in a convenient and practical manner through deposition of an ultrathin exterior protective layer that effectively precludes formation of defects in the course of production. The invention assures that an advantageous combination of selectivity and permeability can be obtained upon the use of composite membranes for air dehydration, acid gas based separation, production of nitrogen and other commercially important gas separations.

## Claims

1. A process for the production of a multilayer composite hollow fiber membrane comprising:
(a) applying a thin coating of a first coating solution to a hollow fiber substrate;
(b) passing the hollow fiber substrate having said thin coating thereon through an in-line heated oven to remove the solvent employed in the first coating solution therefrom, to cure the coating, without contacting the thus coated hollow fiber with any mechanical elements of said heated oven;
(c) applying a thin coating of an additional coating solution to the thus coated and treated hollow fiber, said additional coating solution comprising an outer, protective, defect sealing material;
(d) passing the coated hollow fiber through an in-line heated oven following such application of an additional coating solution to the coated hollow fiber to remove the solvent employed in said additional coating solution therefrom, to cure the coating, without contacting the thus coated hollow fiber with any mechanical elements of said heated oven; and
(e) passing the coated hollow fiber having two coatings thereon to, and collecting said coated hollow fiber on, hollow fiber processing take-up equipment.

2. The process of Claim 1 in which the hollow fiber is passed vertically upward, in steps (b), (c) and (d), for said coating and curing operations.

3. The process of Claim 1 and including, between steps (b) and (c) above, the following additional steps:
(f) applying a thin coating of one or more additional coating solutions to the thus coated and treated hollow fiber; and
(g) passing the coated hollow fiber through an in-line heated oven following each such application of an additional coating solution to the coated hollow fiber to remove the solvent employed in each said additional coating solution therefrom, to cure the coating, without contacting the thus coated hollow fiber with any mechanical elements of the heated oven.

4. The process of Claim 1 in which said additional coating applied in step (c) and said coating as applied in step (a) are cured, in steps (d) and (b), in a single in-line heated oven.

5. The process of Claim 1 in which, in step (c), the hollow fiber passes through roller coater applicator means for the coating thereof.

6. An apparatus for the production of a multilayer composite hollow fiber membrane comprising:
(a) coating applicator means containing a first coating solution for application to a hollow fiber membrane substrate;
(b) an in-line heated oven adapted for the removal of solvent employed therefrom, for the curing of the coating, without contact of said thus coated hollow fiber substrate with any portion of the structure of said heated oven;
(c) coating applicator means for applying a thin coating of an additional coating solution to the thus coated and treated hollow fiber, said additional coating solution comprising an outer, protective, defect sealing material;
(d) an in-line heated oven following said coating applicator means adapted for the removal of solvent employed in said additional coating solution therefrom, to cure the coating, without contacting the thus coated hollow fiber with any mechanical elements of said heated oven.
(e) drive roller means for directing the hollow fiber through elements (a) - (d) above;
(f) hollow fiber processing take-up equipment for collecting the coated hollow fiber.

7. The apparatus of Claim 6 in which the coating applicator means and the in-line heated oven of elements (c) and (d) above are positioned vertically in-line with the coating vessel and in-line heated oven of elements (a) and (b) above.

8. The apparatus of Claim 6 and including one or more additional coating applicator means and in-line head oven positioned between said elements (a) and (b) and said elements (c) and (d).

9. The apparatus of Claim 6 in which a single in-line heated oven is adapted for the passage of the coated hollow fiber therethrough following the coating thereof in the coating applicator means of elements (c) and the coating applicator means of element (a).

10. A multilayer composite hollow fiber membrane produced by the process comprising:
(a) applying a thin coating of a first coating solution to a hollow fiber substrate;
(b) passing the hollow fiber substrate having said thin coating thereon through an in-line heated oven to remove the solvent employed in the first coating solution therefrom, to cure the coating, without contacting the thus coated hollow fiber with any mechanical elements of said heated oven;
(c) applying a thin coating of an additional coating solution to the thus coated and treated hollow fiber, the last such additional coating solution comprising an outer, protective, defect sealing material;
(d) passing the coated hollow fiber through an in-line heated oven following the application of the additional coating solution to the coated hollow fiber to remove the solvent employed in said additional coating solution therefrom, to cure the coating, without contacting the thus coated hollow fiber with any mechanical elements of said heated oven; and
(e) passing the coated hollow fiber having two coatings thereon to, and collecting said coated hollow fiber on, processing take-up equipment.

11. The multilayer composite membrane of Claim 10 in which the last additional coating has a thickness of less than 0.2µ.

12. The multilayer composite membrane of Claim 11 in which the last additional coating has a thickness of less than 500Å.

13. The multilayer composite membrane of Claim 11 in which the hollow fiber substrate is passed vertically upward, in steps (b), (c) and (d).

14. The multilayer composite membrane of Claim 10 and including, between steps (b) and (c) above, the following additional steps:
(f) applying a thin coating of one or more additional coating solutions to the thus coated and treated hollow fiber; and
(g) passing the coated hollow fiber through an in-line heated oven following each such application of an additional coating solution to the coated hollow fiber to remove the solvent employed in each said additional coating solution therefrom, to cure the coating, without contacting the thus coated hollow fiber with any mechanical elements of the heated oven.

15. The multilayer composite membrane of Claim 10 in which coating applied in step (a) and said additional coating as applied in step (c) are cured, in steps (b) and (d), in a single in-line heated oven.

16. The multilayer composite membrane of Claim 10 in which the outer, protective, defect sealing coating comprises a polysiloxane material.

17. The multilayer composite membrane of Claim 10 in which the outer, protective, defect sealing coating comprises a perfluorinated material.

18. The multilayer composite membrane of Claim 17 in which said perfluorinated material contains CF₃ and CF₂ groups.

19. The multilayer composite membrane of Claim 10 in which the surface energy of the outer, protective, defect sealing coating is below 30 dynes/cm.

20. The multilayer composite membrane of Claim 19 in which said surface energy is below 20 dynes/cm.
